# EUROPEAN PATENT SPECIFICATION

(11) **EP 3 736 101 B1**
(45) Date of publication and mention of the grant of the patent: **04.10.2023**
(21) Application number: 19382364.8
(22) Date of filing: 10.05.2019
(51) Int. Cl.: B29C 45/14, F21V 33/00, B29C 45/00, B29K 705/00, B29L 11/00, B29L 31/00, B29C 65/16, B29C 69/00

(54) **METHOD FOR MANUFACTURING A FRONT PANEL**
VERFAHREN ZUR HERSTELLUNG EINER FRONTPLATTE
PROCÉDÉ DE FABRICATION D'UN PANNEAU AVANT

(43) Date of publication of application: 11.11.2020
(73) Proprietor: BSH Hausgeräte GmbH, 81739 München (DE)
(72) Inventor: Alaman Aguilar, Jorge, 50012 Zaragoza (ES); Concheso Doria, Carlos, 50006 Zaragoza (ES); Dominguez Celorrio, Amelia, 50007 Zaragoza (ES); Escartin Barduzal, Andres, 50009 Zaragoza (ES); Graus Almenar, Javier, 50002 Zaragoza (ES); Planas Layunta, Fernando, 50009 Zaragoza (ES); Tur Gil, Alejandro Juan, 28029 Madrid (ES); Urrutia Angos, David, 50009 Zaragoza (ES)

(56) References cited:
- EP-A1- 1 944 389
- WO-A1-2017/103861
- WO-A1-2019/053164
- CN-A- 103 009 626
- TW-U- M 545 692
- US-A1- 2008 024 470
- US-A1- 2010 061 040
- US-A1- 2019 001 441
- US-B1- 6 887 413
- US-B2- 9 910 460
- US-B2- 10 024 323

## Description

The present invention relates to a method for manufacturing a front panel with a metallic layer and a thermoplastic layer. The invention further relates to a front panel manufactured by such a method and to a home appliance comprising such a front panel.

The external appearance of housings of user devices, particularly those of home appliances, are a key factor for attracting consumers which is even more true for front panels of such housings. Displaying information to a user of the front panel and lighting effects are also important factors. These factors can be incorporated into a front panel by specialized films or layers manufactured via a molding method. In order to enhance the bonding of different layers of a front panel, it is usually necessary to post process such front panels. US 9 910 460 B2 describes a molding tool for molding feet of electronic devices.

The present invention deals with the problem of specifying an improved or at least alternative method for manufacturing a front panel, particularly for a home appliance, which is distinguished in particular by low production costs, simplicity and enhanced mechanical strength. The present invention further deals with the problem of specifying a front panel manufactured by such a method which is distinguished in particular by an aesthetic appeal, lighting effects, displaying information, a haptic stimulus provided to a user, and a high lifetime. This problem is solved by the subject matter of the independent patent claims. Preferred embodiments are the subject matter of the dependent patent claims.

Accordingly, the basic idea of the invention is to overmold a micro-perforated metallic layer with a thermoplastic material in order to form a front panel, and to additionally bond the metallic layer and the thermoplastic layer by an additional bonding step.

The method for manufacturing a front panel with a metallic layer and a thermoplastic layer comprises a step of at least partially micro-perforating the metallic layer, particularly by means of a laser, such that the micro-perforated area of the metallic layer is retro-illuminable. The method further comprises placing the metallic layer in a mold cavity of an injection molding machine. The method further comprises injecting a thermoplastic material into the mold cavity, such that the thermoplastic layer is created from the thermoplastic material and is integrally formed and bonded with the metallic layer. Furthermore, the method comprises letting the thermoplastic layer set in the mold. Afterwards the method comprises ejecting the front panel formed by the metallic layer and the thermoplastic layer from the mold cavity when the thermoplastic layer is set. The method further comprises additionally bonding the metallic layer and the thermoplastic layer to each other by means of applying hot glue, and alternatively or additionally, laser welding, and alternatively or additionally, applying micro structures and/or nano structures. In this way, a retro-illuminable front panel of enhanced mechanical strength and configured to show lighting effects and, display information is manufactured in a simple way and with low production costs.

According to a preferred embodiment the metallic layer and the thermoplastic layer are additionally bonded by means of laser welding the front panel after ejecting the front panel from the mold, such that the metallic layer and the thermoplastic layer are at least partially welded together.

According to another preferred embodiment the metallic layer and the thermoplastic layer are additionally bonded by means applying hot glue to the metallic layer before placing the metallic layer in the mold cavity, such that the hot glue is at least partially arranged between the metallic layer and the thermoplastic layer after injecting the thermoplastic material into the mold cavity.

According to yet another preferred embodiment the metallic layer and the thermoplastic layer are additionally bonded by means of applying micro structures and, alternatively or additionally, nano structures to the metallic layer before placing the metallic layer in the mold cavity, such that the thermoplastic material is at least partially arranged in the micro structures and/or nano structures after injecting the thermoplastic material into the mold cavity.

According to an advantageous embodiment, the metallic layer placed in the mold comprises ferritic and, alternatively or additionally, austenitic cold rolled stainless steel. This allows for a particularly decorative front panel, which also possesses a particularly enhanced mechanical strength.

According to a further advantageous embodiment the metallic layer placed in the mold comprises grinded aesthetic surfaces 2B, 2G (G80-G400), 2J, and, alternatively or additionally, 2K, and, alternatively or additionally, a polished surface 2R. This also allows for a particularly decorative front panel, which also possesses a particularly enhanced mechanical strength.

According to a further preferred embodiment, the thermoplastic material injected comprises polyethylene, polypropylene, polyamide, polycarbonate, acrylonitrile butadiene styrene, polymethyl methacrylate, polyethylene terephthalate, polystyrenes, or any combination thereof. With such a thermoplastic material a front panel with a particularly pleasant haptic stimulus can be manufactured, which is also particularly well configured to be retro-illuminable and to be laser welded.

According to the invention, the thermoplastic material injected comprises up to 80 volume% glass fiber, long glass fiber, carbon fiber, or nano or micro cellulose. With such a thermoplastic material a particularly physically robust thermoplastic layer can be manufactured.

In another advantageous embodiment, before the metallic layer is placed in the mold cavity, the metallic layer is treated by means of a laser treatment, such that the adhesion of the metallic layer to the thermoplastic layer is enhanced. Via such process the adhesion of the metallic layer to the thermoplastic layer is enhanced particularly well.

In yet another advantageous embodiment, the metallic layer placed in the mold cavity has anti-bacterial and, additionally or alternatively, anti-scratch and, additionally or alternatively, self-healing properties. This allows for a front panel with additional advantageous properties.

According to a further preferred embodiment, the thermoplastic material is injected into the mold cavity at a pressure of 300 bar to 1200 bar, and, additionally or alternatively, the thermoplastic material is injected into the mold cavity at a speed of 25 cm³/s to 60 cm³/s, and, additionally or alternatively, the thermoplastic material is injected into the mold cavity at a temperature of 220 °C to 300 °C. These parameters provide particularly optimized boundary conditions for the injection of the thermoplastic material into the mold.

Advantageously, during injecting the thermoplastic material into the mold cavity and, additionally or alternatively, while letting at least the thermoplastic layer set, the molding machine is kept at a temperature of 50°C to 100 °C. This allows for a particularly continuous flow of thermoplastic material into the mold cavity without thermoplastic material setting too early, such that thermoplastic material injected after some first amount of thermoplastic material enters the mold cavity is not blocked from reaching parts of the mold cavity, particularly part of the mold cavity further away from the sprue, due to setting of the thermoplastic material which entered before.

The invention further relates to a front panel, particularly for a home appliance, manufactured by the method according to the invention. The previously explained advantages of the method according to the invention therefore also transfer to the front panel.

Advantageously, the thermoplastic layer of the front panel has a total transmittance between 0.6 and 1. Such a thermoplastic layer is particularly well configured to be retro-illuminable and to be laser welded.

Further advantageously, the thermoplastic layer of the front panel has a refractive index between 0.6 and 1.5. Such a thermoplastic layer is also particularly well configured to be retro-illuminable and to be laser welded.

Furthermore, the invention relates to a home appliance comprising a front panel according to the present invention. The previously explained advantages of the method according to the invention and of the front panel therefore also transfer to the home appliance.

In an advantageous embodiment of the home appliance, the home appliance comprises a light source to retro-illuminate the micro-perforated area of the metallic layer. The home appliance further comprises an electronic control unit, wherein the electronic control unit is communicating with the light source, and is configured/programmed to retro-illuminate the micro-perforated area.

Further important features and advantages of the invention can be gathered from the subclaims, from the drawings and from the associated figure description using the drawings.

It goes without saying that the features mentioned above and those still to be explained below can be used not only in the respectively specified combination but also in other combinations or on their own without departing from the scope of the present invention.

An example of the invention is illustrated in the drawings and will be explained in more detail in the following description.

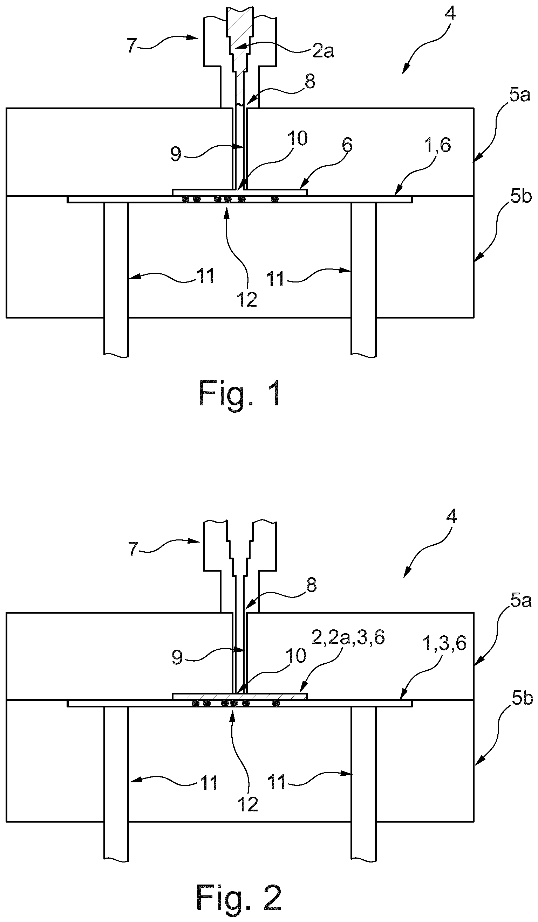

Figure 1 schematically shows an example of a molding machine 4 in a profile view before the injection of a thermoplastic material 2a into a mold cavity 6 of the molding machine 4. In operation, the molding machine 4 runs the method for manufacturing a front panel 3 according to the present invention.

In figure 1 the molding machine 4 is closed, meaning an injection mold 5a of the molding machine 4 and an ejector mold 5b of the molding machine 4 are connected, such that the cavity 6 is formed. The thermoplastic material 2a is provided in a barrel 7 and heated such that it liquefies. Heating can occur through heating elements and, additionally or alternatively, by mechanical force of a screw (not shown in figure 1 and 2) in the injection barrel 7. Such a screw can also be used to drive the thermoplastic material 2a through the nozzle 8 into the sprue 9.

The method for manufacturing a front panel 3 with a metallic layer 1 and a thermoplastic layer 2 comprises a step of at least partially micro-perforating an area 12 of the metallic layer 1, particularly by means of a laser, such that the micro-perforated area 12 of the metallic layer 1 is retro-illuminable. The method further comprises placing the metallic layer 1 in the mold cavity 6 of the injection molding machine 4. In the example of figures 1 and 2 the metallic layer 1 is placed in a part of the mold cavity 6 which is enclosed on three sides by the ejector mold 5b.

In the examples of Figures 1 and 2, the metallic layer 1 comprises ferritic cold rolled stainless steel. Additionally or alternatively, the metallic layer 1 placed in the mold cavity could also comprise austenitic cold rolled stainless steel. The metallic layer 1 can also comprise a grind aesthetic surface, for example 2B, 2G (G80-G400), 2J or 2K or a combination thereof. Additionally or alternatively, the metallic layer 1 can comprise a polished surface like 2R. Additional decorative properties of the metallic layer like decoration with paint or engravings are also possible. Also, before the metallic layer 1 is placed in the mold cavity 6, the metallic layer 1 is treated by means of a laser treatment, such that adhesion of the metallic layer 1 to thermoplastic material 2a molded over the metallic layer 1 is enhanced. The metallic layer 1 placed in the mold can also have anti-bacterial, anti-scratch, and self-healing properties.

The method further comprises injecting a thermoplastic material 2a into the mold cavity 6, such that the thermoplastic layer 2 is created from the thermoplastic material 2a and is integrally formed and bonded with the metallic layer 1. In the example of figures 1 and 2 the thermoplastic layer 2 is injected in a part of the mold cavity 6 which is enclosed on three sides by the injector mold 5a and which is not occupied by the metallic layer 1. The thermoplastic material 2a is injected into the mold cavity 6 at a pressure of 300 bar to 1200 bar, at a speed of 25 cm³/s to 60 cm³/s, and at a temperature of 220°C to 300 °C.

The thermoplastic material 2a comprises polyethylene, polypropylene, polyamide, polycarbonate, acrylonitrile butadiene styrene, polymethyl methacrylate, polyethylene terephthalate, polystyrenes or any combination thereof. The thermoplastic material 2a also comprises glass fiber, particularly 30 volume-%. Alternatively or additionally, the thermoplastic material can comprise long glass fiber, carbon fiber, or nano or micro cellulose.

During injecting the thermoplastic material 2a into the mold cavity 6 and, alternatively or additionally, while letting at least the thermoplastic layer 2 set, the molding machine 4 is, particularly partially, kept at a temperature of 50 °C to 100 °C. The temperature of the injector mold 5a and the ejector mold 5b can be identical or different from each other.

The thermoplastic material 2a flows continuously into the mold cavity 6 through the gate 10 without thermoplastic material 2a setting too early, such that thermoplastic material 2a injected into the mold cavity 6 after some first amount of thermoplastic material 2a enters the mold cavity 6 is not blocked from reaching any parts of the mold cavity 6, particularly parts of the mold cavity 6 further away from the sprue 9. Trapped air in the mold cavity 6 can escape though air vents (not shown in figures 1 and 2) in the molding machine 4.

Then the thermoplastic layer 2 is let set in the mold cavity 6. Figure 2 schematically shows an example of the molding machine 4 in a profile view after the injection of the thermoplastic material 2a into the mold cavity 6 of the molding machine 4 has started. It is possible that there is still some thermoplastic material 2a in the sprue 9 and, additionally or alternatively, in the injection barrel 7.

When the thermoplastic layer 2, in other words the thermoplastic material 2a forming the thermoplastic layer, is set, the molding machine 4 is opened and the front panel 3 formed by the metallic layer and the thermoplastic layer is ejected from the mold cavity. The ejection is done by means of ejector pins 11, wherein the ejector pins push into the mold cavity 6 and against the front panel 3, which now comprises the metallic layer 1 and the thermoplastic layer 2, formed integrally with each other and bonded to each other.

In an additional step of the method, the metallic layer 1 and the thermoplastic layer 2 are additionally bonded by means of applying hot glue. Alternatively or additionally, the metallic layer 1 and the thermoplastic layer 2 are additionally bonded by means of laser welding. Alternatively or additionally, the metallic layer 1 and the thermoplastic layer 2 are additionally bonded by means of applying micro structures and, alternatively or additionally, nano structures.

For example, the metallic layer 1 and the thermoplastic layer 2 can be additionally bonded by means of laser welding the front panel 3 after ejecting the front panel from the mold cavity, such that the metallic layer 1 and the thermoplastic layer 2 are at least partially welded together.

The metallic layer 1 and the thermoplastic layer 2 can also be additionally bonded by means applying hot glue to the metallic layer 1 before placing the metallic layer in the mold cavity, such that the hot glue is at least partially arranged between the metallic layer 1 and the thermoplastic layer 2 after injecting the thermoplastic material 2a into the mold cavity 6.

The metallic layer 1 and the thermoplastic layer 2 can be additionally bonded by means of applying micro structures and, alternatively or additionally, nano structures to the metallic layer 1 before placing the metallic layer in the mold cavity, such that the thermoplastic material 2a is at least partially arranged in the micro structures or nano structures respectively after injecting the thermoplastic material 2a into the mold cavity 6.

Figure 2 shows an embodiment of the front panel 3 according to the invention in a state not yet ejected from the mold cavity 6 in a profile view. The thickness of the metallic layer 1 of the front panel 3 is between 0.05 and 1 mm. The thickness of the thermoplastic layer 2 of the front panel 3 is between 1 and 5 mm. Both layers 1, 2 can also be regarded as films or foils. The thermoplastic layer 2 of the front panel has a total transmittance between 0.6 and 1 and a refractive index between 0.6 and 1.5.

The front panel 3 manufactured according to this example is used for a home appliance (not shown in figure 1 and 2), particularly a dishwasher or a washing machine. The home appliance comprises a light source to retro-illuminate the micro-perforated area 12 of the metallic layer. The home appliance further comprises an electronic control unit, wherein the electronic control unit is communicating with the light source, and is configured/programmed to retro-illuminate the micro-perforated area 12.

### LIST OF REFERENCE CHARACTERS/SIGNS

- 1: Preformed decorative thin layer
- 2: Thermoplastic layer
- 2a: Thermoplastic material
- 3: Front panel
- 4: Injection molding machine
- 5a: Injector mold
- 5b: Ejector mold
- 6: Mold cavity
- 7: Injection barrel
- 8: Nozzle
- 9: Sprue
- 10: Gate
- 11: Ejector pins

## Claims

1. A method for manufacturing a front panel (3) with a metallic layer (1) and a thermoplastic layer (2), comprising the steps of:
a) At least partially micro-perforating the metallic layer (1), particularly by means of a laser, such that the micro-perforated area (12) is retro-illuminable;
b) Placing the metallic layer (1) in a mold cavity (6) of an injection molding machine (4);
c) Injecting a thermoplastic material (2a) into the mold cavity (6), such that the thermoplastic layer (2) is created from the thermoplastic material (2a) and is integrally formed and bonded with the metallic layer (1);
d) Letting the thermoplastic layer (2) set in the mold;
e) Ejecting the front panel (3) formed by the metallic layer (1) and the thermoplastic layer (2) from the mold when the thermoplastic layer (2) is set,
**characterized in that**
the thermoplastic material (2a) injected in step b) comprises up to 80 volume-% glass fiber, long glass fiber, carbon fiber, or nano or micro cellulose,
wherein the method further comprises the following additional step x):
x) Additionally bonding the metallic layer (1) and the thermoplastic layer (2) by means of
- applying hot glue,
- and/or laser welding,
- and/or applying micro structures and/or nano structures.

2. The method according to claim 1,
**characterized in that**
in step x) the metallic layer (1) and the thermoplastic layer (2) are additionally bonded by means of laser welding the front panel (3) after step e), such that the metallic layer (1) and the thermoplastic layer (2) are at least partially welded together.

3. The method according to claim 1 or 2,
**characterized in that**
in step x) the metallic layer (1) and the thermoplastic layer (2) are additionally bonded by means applying hot glue to the metallic layer (1) before step b), such that the hot glue is at least partially arranged between the metallic layer (1) and the thermoplastic layer (2) after injecting the thermoplastic material (2a) into the mold cavity (6).

4. The method according to claim 1 to 3,
**characterized in that**
in step x) the metallic layer (1) and the thermoplastic layer (2) are additionally bonded by means of applying micro structures and/or nano structures to the metallic layer (1) before step b), such that the thermoplastic material (2a) is at least partially arranged in the micro structures and/or nano structures after injecting the thermoplastic material (2a) into the mold cavity (6).

5. The method according any of claims 1 to 4,
**characterized in that**
the metallic layer (1) placed in the mold in step b) comprises ferritic and/or austenitic cold rolled stainless steel.

6. The method according any of claims 1 to 5,
**characterized in that**
the metallic layer (1) placed in the mold in step b) comprises grinded aesthetic surfaces 2B, 2G (G80-G400), 2J, and/or 2K, and/or a polished surface 2R.

7. The method according to any of claims 1 to 6,
**characterized in that**
the thermoplastic material (2a) injected in step c) comprises polyethylene, polypropylene, polyamide, polycarbonate, acrylonitrile butadiene styrene, polymethyl methacrylate, polyethylene terephthalate, polystyrenes, polysulfone, or any combination thereof.

8. The method according to any of claims 1 to 7,
**characterized in that**
the method further comprises the following additional step a2) carried out before step b):
a2) Treating the metallic layer (1)by means of a laser treatment, such that the adhesion of the metallic layer (1) to the thermoplastic layer (2) is enhanced.

9. The method according to any of claims 1 to 8,
**characterized in that**
the metallic layer (1) placed in the mold cavity (6) in step a) has anti-bacterial and/or anti-scratch properties.

10. The method according to any of claims 1 to 9,
**characterized in that**
in step b) the thermoplastic material (2a) is injected into the mold cavity at a pressure of 300 bar to 1200 bar, and/or
in step b) the thermoplastic material (2a) is injected into the mold cavity at a speed of 25 cm³/s to 60 cm³/s, and/or
in step b) the thermoplastic material (2a) is injected into the mold cavity at a temperature of 220 °C to 300 °C.

11. The method according to any of claims 1 to 10,
**characterized in that**
in step b) and/or step c) the molding machine (4) is kept at a temperature of 50°C to 100 °C.

12. A front panel (3), particularly for a home appliance, manufactured by the method according to any of claims 1 to 11.

13. The front panel according to claim 12,
**characterized in that**
the thermoplastic layer (2) has a total transmittance between 0.6 and 1.

14. The front panel according to claim 12 or 13,
**characterized in that**
the thermoplastic layer (2) has a refractive index between 0.6 and 1.5.

15. A home appliance comprising a front panel according to any of claims 12 to 14, wherein
- the home appliance preferably comprises a light source to retro-illuminate the micro-perforated area (12) of the metallic layer (1); and
- the home appliance preferably comprises an electronic control unit, wherein the electronic control unit is communicating with the light source, and is configured/programmed to retro-illuminate the micro-perforated area.

## Patentansprüche

1. Verfahren zum Herstellen einer Frontblende (3) mit einer Metallschicht (1) und einer Thermoplastschicht (2), das folgende Schritte umfasst:
a) zumindest teilweises derartiges Mikroperforieren der Metallschicht (1), insbesondere mithilfe eines Lasers, dass der mikroperforierte Bereich (12) von hinten beleuchtbar ist,
b) Platzieren der Metallschicht (1) in einem Formwerkzeughohlraum (6) einer Spritzgießmaschine (4),
c) Einspritzen eines Thermoplastmaterials (2a) in den Formwerkzeughohlraum (6), so dass die Thermoplastschicht (2) aus dem Thermoplastmaterial (2a) erzeugt und auf die Metallschicht (1) aufgepresst und damit verbunden wird,
d) Aushärtenlassen der Thermoplastschicht (2) im Formwerkzeug,
e) Auswerfen der von der Metallschicht (1) und der Thermoplastschicht (2) gebildeten Frontblende (3) aus dem Formwerkzeug, wenn die Thermoplastschicht (2) ausgehärtet ist, **dadurch gekennzeichnet, dass**
das bei Schritt b) eingespritzte Thermoplastmaterial (2a) bis zu 80 Volumen-% Glasfaser, lange Glasfaser, Kohlenstofffaser oder Nano- oder Mikrocellulose umfasst,
wobei das Verfahren ferner folgenden zusätzlichen Schritt x) umfasst:
x) zusätzliches Verbinden der Metallschicht (1) und der Thermoplastschicht (2) durch
- Aufbringen von Heißkleber
- und/oder Laserschweißen
- und/oder Aufbringen von Mikro- und/oder Nanostrukturen.

2. Verfahren nach Anspruch 1,
**dadurch gekennzeichnet, dass**
bei Schritt x) die Metallschicht (1) und die Thermoplastschicht (2) zusätzlich durch Laserschweißen der Frontblende (3) nach Schritt e) verbunden werden, so dass die Metallschicht (1) und die Thermoplastschicht (2) zumindest teilweise miteinander verschweißt sind.

3. Verfahren nach Anspruch 1 oder 2,
**dadurch gekennzeichnet, dass**
bei Schritt x) die Metallschicht (1) und die Thermoplastschicht (2) zusätzlich durch Aufbringen von Heißkleber auf die Metallschicht (1) vor Schritt b) verbunden werden, so dass der Heißkleber nach dem Einspritzen des Thermoplastmaterials (2a) in den Formwerkzeughohlraum (6) zumindest teilweise zwischen der Metallschicht (1) und der Thermoplastschicht (2) angeordnet ist.

4. Verfahren nach Anspruch 1 bis 3,
**dadurch gekennzeichnet, dass**
bei Schritt x) die Metallschicht (1) und die Thermoplastschicht (2) zusätzlich durch Aufbringen von Mikro- und/oder Nanostrukturen auf die Metallschicht (1) vor Schritt b) verbunden werden, so dass das Thermoplastmaterial (2a) nach dem Einspritzen in den Formwerkzeughohlraum (6) zumindest teilweise in den Mikro- und/oder Nanostrukturen angeordnet ist.

5. Verfahren nach einem der Ansprüche 1 bis 4,
**dadurch gekennzeichnet, dass**
die bei Schritt b) im Formwerkzeug platzierte Metallschicht (1) ferritischen und/oder austenitischen kaltgewalzten nichtrostenden Stahl umfasst.

6. Verfahren nach einem der Ansprüche 1 bis 5,
**dadurch gekennzeichnet, dass**
die bei Schritt b) im Formwerkzeug platzierte Metallschicht (1) geschliffene ästhetische Oberflächen 2B, 2G (G80-G400), 2J und/oder 2K und/oder eine polierte Oberfläche 2R umfasst.

7. Verfahren nach einem der Ansprüche 1 bis 6,
**dadurch gekennzeichnet, dass**
das bei Schritt c) eingespritzte Thermoplastmaterial (2a) Polyethylen, Polypropylen, Polyamid, Polycarbonat, Acrylnitril-Butadien-Styrol, Polymethylmethacrylat, Polyethylenterephthalat, Polystyrole, Polysulfon oder eine beliebige Kombination davon umfasst.

8. Verfahren nach einem der Ansprüche 1 bis 7,
**dadurch gekennzeichnet, dass**
das Verfahren ferner folgenden zusätzlichen Schritt a2) umfasst, der vor Schritt b) ausgeführt wird:
a2) Laserbehandeln der Metallschicht (1), so dass die Adhäsion der Metallschicht (1) an der Thermoplastschicht (2) verbessert wird.

9. Verfahren nach einem der Ansprüche 1 bis 8,
**dadurch gekennzeichnet, dass**
die bei Schritt a) im Formwerkzeug (6) platzierte Metallschicht (1) antibakterielle und/oder vor Kratzern schützende Eigenschaften aufweist.

10. Verfahren nach einem der Ansprüche 1 bis 9,
**dadurch gekennzeichnet, dass**
das Thermoplastmaterial (2a) bei Schritt b) mit einem Druck von 300 bar bis 1200 bar in den Formwerkzeughohlraum eingespritzt wird und/oder
das Thermoplastmaterial (2a) bei Schritt b) mit einer Geschwindigkeit von 25 cm3/s bis 60 cm3/s in den Formwerkzeughohlraum eingespritzt wird und/oder
das Thermoplastmaterial (2a) bei Schritt b) bei einer Temperatur von 220°C bis 300°C in den Formwerkzeughohlraum eingespritzt wird.

11. Verfahren nach einem der Ansprüche 1 bis 10,
**dadurch gekennzeichnet, dass**
die Formmaschine (4) bei Schritt b) und/oder Schritt c) auf einer Temperatur von 50°C bis 100°C gehalten wird.

12. Frontblende (3), insbesondere für ein Haushaltsgerät, die mithilfe des Verfahrens nach einem der Ansprüche 1 bis 11 hergestellt ist.

13. Frontblende nach Anspruch 12,
**dadurch gekennzeichnet, dass**
die Thermoplastschicht (2) einen Gesamttransmissionsgrad von 0,6 bis 1 aufweist.

14. Frontblende nach Anspruch 12 oder 13,
**dadurch gekennzeichnet, dass**
die Thermoplastschicht (2) einen Brechungsindex von 0,6 bis 1,5 aufweist.

15. Haushaltsgerät mit einer Frontblende nach einem der Ansprüche 12 bis 14,
wobei
- das Haushaltsgerät vorzugsweise eine Lichtquelle zum Beleuchten des mikroperforierten Bereichs (12) der Metallschicht (1) von hinten umfasst und
- das Haushaltsgerät vorzugsweise eine elektronische Steuerung umfasst, wobei die elektronische Steuerung mit der Lichtquelle kommuniziert und so konfiguriert/programmiert ist, dass sie den mikroperforierten Bereich von hinten beleuchtet.

## Revendications

1. Procédé de fabrication d'un panneau avant (3) avec une couche métallique (1) et une couche thermoplastique (2), comprenant les étapes suivantes :
a) micro-perforation au moins partielle de la couche métallique (1), en particulier au moyen d'un laser, de telle manière que la surface micro-perforée (12) puisse être rétroéclairée,
b) placement de la couche métallique (1) dans une cavité de moule (6) d'une machine de moulage par injection (4),
c) injection d'un matériau thermoplastique (2a) dans la cavité du moule (6), de sorte que la couche thermoplastique (2) est créée à partir du matériau thermoplastique (2a) et est formée d'un seul tenant et liée à la couche métallique (1),
d) le fait de laisser la couche thermoplastique (2) durcir dans le moule,
e) éjection du panneau avant (3) formé par la couche métallique (1) et la couche thermoplastique (2) du moule lorsque la couche thermoplastique (2) est durcie, **caractérisé en ce que**
le matériau plastique (2a) injecté à l'étape b) comprend jusqu'à 80 % en volume de fibre de verre, de fibre de verre longue, de fibre de carbone ou de nano- ou microcellulose,
dans lequel le procédé comprend en outre l'étape supplémentaire suivante x) :
x) la liaison supplémentaire de la couche métallique (1) et de la couche thermoplastique (2) au moyen de :
- l'application de colle chaude,
- et/ou un soudage au laser,
- et/ou l'application de microstructures et/ou de nanostructures.

2. Procédé selon la revendication 1,
**caractérisé en ce que** :
dans l'étape x), la couche métallique (1) et la couche thermoplastique (2) sont liées additionnellement au moyen d'un soudage par laser du panneau avant (3) après l'étape e), de telle manière que la couche métallique (1) et la couche thermoplastique (2) sont au moins en partie soudées ensemble.

3. Procédé selon la revendication 1 ou 2,
**caractérisé en ce que**
dans l'étape x), la couche métallique (1) et la couche thermoplastique (2) sont liées additionnellement en appliquant de la colle chaude sur la couche métallique (1) avant l'étape b), de sorte que la colle chaude est au moins en partie disposée entre la couche métallique (1) et la couche thermoplastique (2) après l'injection du matériau thermoplastique (2a) dans la cavité du moule (6).

4. Procédé selon la revendication 1 à 3,
**caractérisé en ce que**
dans l'étape x), la couche métallique (1) et la couche thermoplastique (2) sont liées additionnellement par l'application de microstructures et/ou de nanostructures sur la couche métallique (1) avant l'étape b), de telle manière que le matériau thermoplastique (2a) est au moins en partie disposé dans les microstructures et/ou les nano-structures après l'injection du matériau thermoplastique (2a) dans la cavité du moule (6).

5. Procédé selon l'une quelconque des revendications 1 à 4,
**caractérisé en ce que**
la couche métallique (1) placée dans le moule à l'étape b) comprend de l'acier inoxydable laminé à froid ferrique et/ou austénitique.

6. Procédé selon l'une quelconque des revendications 1 à 5,
**caractérisé en ce que**
la couche métallique (1) placée dans le moule à l'étape b) comprend des surfaces esthétiques meulées à finition 2B, 2G (G80-G400), 2J et/ou 2K, et/ou une surface polie 2R.

7. Procédé selon l'une quelconque des revendications 1 à 6,
**caractérisé en ce que**
le matériau thermoplastique (2a) injecté à l'étape c) comprend du polyéthylène, du polypropylène, du polyamide, du polycarbonate, de l'acrylonitrile butadiène styrène, du méthacrylate de polyméthyle, du téréphtalate de polyéthylène, du polystyrène, du polysulfone, ou une quelconque combinaison d'entre eux.

8. Procédé selon l'une quelconque des revendications 1 à 7,
**caractérisé en ce que**
le procédé comprend en outre l'étape supplémentaire suivante a2) exécutée avant l'étape b) :
a2) le traitement de la couche métallique (1) au moyen d'un traitement au laser, de sorte que l'adhésion de la couche métallique (1) sur la couche thermoplastique (2) est renforcée.

9. Procédé selon l'une quelconque des revendications 1 à 8,
**caractérisé en ce que**
la couche métallique (1) placée dans la cavité de moule (6) à l'étape a) possède des propriétés anti-bactériennes et/ou anti-rayure.

10. Procédé selon l'une quelconque des revendications 1 à 9,
**caractérisé en ce que**
dans l'étape b), le matériau thermoplastique (2a) est injecté dans la cavité du moule à une pression de 300 bars à 1200 bars, et/ou
dans l'étape b), le matériau thermoplastique (2a) est injecté dans la cavité du moule à une vitesse de 25 cm³/s à 60 cm³/s, et/ou
dans l'étape b), le matériau thermoplastique (2a) est injecté dans la cavité du moule à une température de 220 °C à 300 °C.

11. Procédé selon l'une quelconque des revendications 1 à 10,
**caractérisé en ce que**
dans l'étape b) et/ou dans l'étape c), la machine de moulage (4) est maintenue à une température de 50 °C à 100 °C.

12. Panneau avant (3), en particulier pour un appareil ménager, fabriqué par le procédé selon l'une quelconque des revendications 1 à 11.

13. Panneau avant selon la revendication 12,
**caractérisé en ce que**
la couche thermoplastique (2) présente une transmittance totale entre 0,6 et 1.

14. Panneau avant selon la revendication 12 ou 13,
**caractérisé en ce que**
la couche thermoplastique (2) a un indice de réfraction entre 0,6 et 1,5.

15. Appareil ménager comprenant un panneau avant selon l'une quelconque des revendications 12 à 14,
dans lequel :
- l'appareil ménager comprend de préférence une source de lumière pour rétroéclairer la surface micro-perforée (12) de la couche métallique (1), et
- l'appareil ménager comprend de préférence une unité de commande électronique, dans lequel l'unité de commande électronique communique avec la source de lumière et est configurée / programmée pour rétroéclairer la surface micro-perforée.
